# FASCICULE DE BREVET EUROPEEN

(11) **EP 4 348 009 B1**
(45) Date de publication et mention de la délivrance du brevet: **12.03.2025**
(21) Numéro de dépôt: 22733194.9
(22) Date de dépôt: 25.05.2022
(51) Int. Cl.: F01D 5/28, F01D 5/30

(54) **EMBUVAGE DIFFÉRENCIÉ DES TORONS DU RENFORT FIBREUX D'UNE AUBE DE SOUFFLANTE**
DIFFERENZIERTE VERKÜRZUNG VON STRÄNGEN DER FASERVERSTÄRKUNG EINER GEBLÄSESCHAUFEL
DIFFERENTIATED SHORTENING OF STRANDS OF THE FIBROUS REINFORCEMENT OF A FAN BLADE

(30) Priorité: 27.05.2021 FR 2105514
(43) Date de publication de la demande: 10.04.2024
(73) Titulaire: SAFRAN AIRCRAFT ENGINES, 75015 Paris (FR)
(72) Inventeur: GONDRE, Guillaume, Pascal, Jean-Charles, 77550 MOISSY-CRAMAYEL (FR); TABLEAU, Nicolas, Paul, 77550 MOISSY-CRAMAYEL (FR); SCHNEIDER-DIE-GROSS, Julien, Paul, 77550 MOISSY-CRAMAYEL (FR)
(74) Mandataire: Regimbeau
(86) Numéro de dépôt international: PCT/FR2022/050992
(87) Numéro de publication internationale: WO 2022/248804

(56) Documents cités:
- EP-A1- 3 511 240
- WO-A1-2020/089344
- WO-A1-2021/005286
- DE-A1- 102019 001 831
- FR-A1- 2 995 933
- US-B1- 10 174 624

## Description

### DOMAINE DE L'INVENTION

L'invention concerne de manière générale le domaine des turbomachines, et plus particulièrement celui des aubes de soufflante en matériau composite de ces turbomachines et leur procédé de fabrication.

L'invention s'applique plus particulièrement aux aubes de soufflante carénées, notamment pour des turbomachines présentant un très fort taux de dilution, ainsi qu'aux aubes (ou hélices) de soufflante non carénée de type à calage variable ou stator par exemple à calage variable dans une turbomachine de type « USF » (acronyme anglais de Unducted Single Fan, pour soufflante unique non carénée) ayant un rotor et un stator ou open rotor à deux rotors assimilables à une aube de module de soufflante. Ainsi, outre un rotor de soufflante de turbomachine open rotor l'invention peut aussi s'appliquer à une hélice constituant une soufflante dans le cadre d'un turbopropulseur.

### ETAT DE LA TECHNIQUE

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes dans un matériau composite comportant un renfort fibreux densifié par une matrice polymère, qui sont plus légères par rapport à des aubes métalliques à caractéristiques propulsives équivalentes et qui ont une tenue à la chaleur satisfaisante.

La zone d'échasse des aubes est fortement sollicitée en utilisation, en particulier dans la zone d'interface de l'aube avec le disque de soufflante. L'effort centrifuge résultant de la rotation du rotor de soufflante endommage en effet l'aube dans cette zone d'interface. En fonction des formes/designs retenus pour l'intégration de cette pièce par rapport au disque, il peut en résulter des sollicitations locales multi-axiales de type traction hors plan (c'est-à-dire suivant une direction sensiblement normale à l'intrados) et en cisaillement hors plan entre les différentes couches du matériau composite.

Afin d'éviter que ces contraintes multiaxiales ne soient trop localisées, il a été proposé de rallonger le pied d'aube vers l'amont. Toutefois, cela implique de rallonger également le disque de soufflante et impacte donc négativement la masse totale du module de soufflante.

Le document WO 2020/089344 décrit une aube de soufflante conforme au préambule de la revendication 1.

### EXPOSE DE L'INVENTION

Un objectif de l'invention est de remédier aux inconvénients précités, en proposant une aube de soufflante pour une turbomachine comprenant un matériau composite renforcé par une matrice, dont la résistance à l'endommagement est améliorée, en particulier dans la zone d'échasse, sans créer pour autant de zone fragilité ni alourdir la masse de la section de soufflante.

Pour cela, selon un premier aspect, l'invention propose une aube de soufflante d'une turbomachine comprenant une structure en matériau composite comprenant un pied configuré pour être inséré dans une empreinte d'un disque de soufflante, une pale propre à s'étendre dans un flux d'air et une échasse s'étendant entre le pied et la pale. La structure en matériau composite présente un intrados, un extrados et une épaisseur totale au niveau de l'échasse, l'épaisseur totale étant mesurée entre l'intrados et l'extrados dans la partie d'échasse dans un plan normal à un axe d'empilement de l'aube. La structure en matériau composite est obtenue par tissage tridimensionnel de torons de trame et de torons de chaine.

Par ailleurs, la structure en matériau composite présente, au sein du pied et/ou de l'échasse, une première couche comprenant l'intrados et présentant une première épaisseur comprise entre 10 % et 25 % de l'épaisseur totale, une deuxième couche comprenant l'extrados et présentant une deuxième épaisseur comprise entre 10 % et 25 % de l'épaisseur totale, et une couche centrale s'étendant entre la première couche et la deuxième couche. Un embuvage des torons de chaîne dans les première et deuxième couches est supérieur à un embuvage des torons de chaîne dans la couche centrale.

Certaines caractéristiques préférées mais non limitatives de l'aube de soufflante selon le premier aspect sont les suivants, pris individuellement ou en combinaison :
- les torons de chaîne au sein de la structure en matériau composite sont contraints avec une tension prédéterminée, la tension subie par les torons de chaîne de la couche centrale étant supérieure à la tension subie par les torons de chaîne dans les première et deuxième couches ;
- les torons de trame au sein de la structure en matériau composite sont contraints avec une tension prédéterminée, la tension subie par les torons de trame de la couche centrale étant inférieure à la tension subie par les torons de trame dans la première et la deuxième couche au sein du pied et/ou de l'échasse ;
- la tension subie par les torons de chaîne de la couche centrale est au moins 100 % supérieure à la tension subie par les torons de chaîne dans la première et la deuxième couche, par exemple entre 100 % et 200 %, et/ou la tension subie par les torons de trame de la couche centrale est au moins 100 % inférieure à la tension subie par les torons de trame dans la première et la deuxième couche, par exemple entre 100 % et 200 % ;
- la première couche, la deuxième couche et la couche centrale s'étendent au sein de l'échasse et du pied ;
- la première couche, la deuxième couche et la couche centrale s'étendent au sein de l'échasse sur une distance au moins égale à 15 % de l'épaisseur totale, de préférence est au moins égale à 20 % de l'épaisseur totale ;
- la première épaisseur et la deuxième épaisseur sont sensiblement égales ;
- la première épaisseur et la deuxième épaisseur sont comprises entre 20 % et 25 % de l'épaisseur totale ; et/ou
- les torons de trame et/ou de chaîne dans la première couche et dans la deuxième couche présentent un module d'élasticité compris entre 150 GPa et 190 GPa et peuvent comprendre des fibres de verre ou de basalte, et les torons de trame et/ou de chaîne dans la couche centrale présentent un module d'élasticité compris entre 240 GPa et 350 GPa, de préférence supérieur ou égal à 250 GPa, et peuvent comprendre des fibres de carbone.

Selon un deuxième aspect, l'invention concerne une soufflante pour une turbomachine comprenant une pluralité d'aubes de soufflante conformes au premier aspect.

Selon un troisième aspect, l'invention propose une turbomachine comprenant une telle soufflante et un aéronef comprenant cette turbomachine.

Selon un quatrième aspect, l'invention propose un aéronef comprenant au moins une turbomachine selon le troisième aspect.

Selon un cinquième aspect, l'invention propose un métier à tissé configuré pour tisser une structure en matériau composite d'une aube selon le premier aspect, le métier à tissé étant caractérisé en ce qu'une tension appliquée aux torons de chaîne de la couche centrale est supérieure à une tension appliquée aux torons de chaîne dans la première et la deuxième couche.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

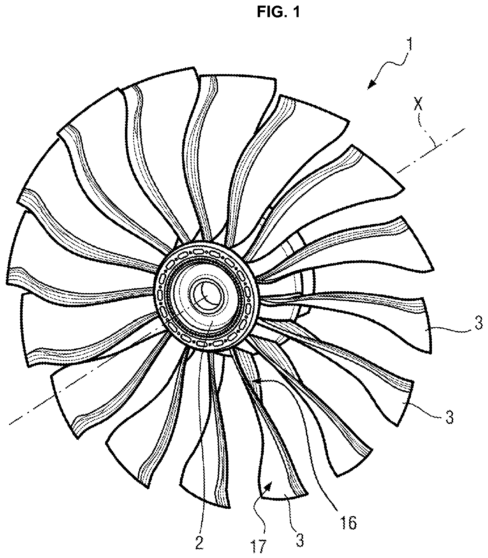

La figure 1 illustre un exemple de soufflante conforme à un mode de réalisation de l'invention ;

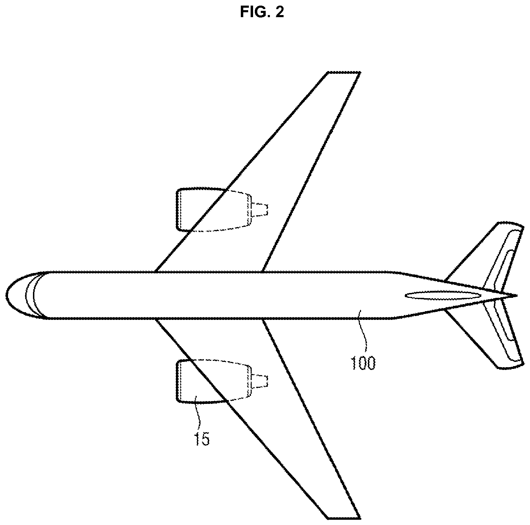

La figure 2 est une vue schématique d'un exemple d'aéronef pouvant comprendre au moins une turbomachine conforme à mode de réalisation de l'invention ;
La figure 3 est une vue schématique d'un exemple d'aube de soufflante conforme à un mode de réalisation de l'invention ; et

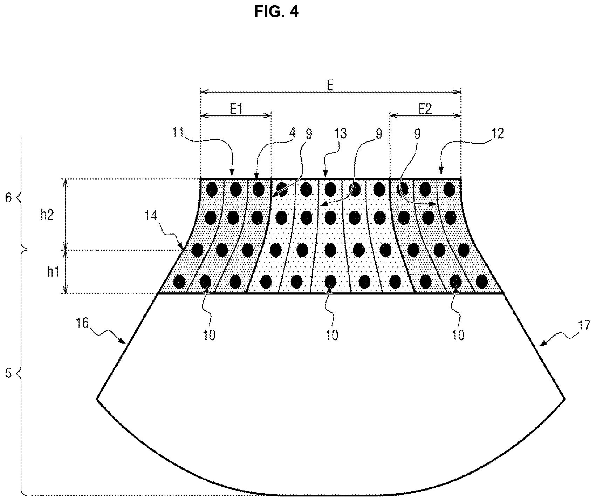

La figure 4 est une vue partielle et en coupe de la structure en matériau composite de l'aube de soufflante la figure 3 sur laquelle ont été représentés de manière très schématique les torons de chaîne et les torons de trame dans la première couche, la deuxième couche et la couche centrale conformément à un mode de réalisation de l'invention.

Sur l'ensemble des figures, les éléments similaires portent des références identiques.

### DESCRIPTION DETAILLEE DE L'INVENTION

Dans la présente demande, l'amont et l'aval sont définis par rapport au sens d'écoulement normal du gaz dans la soufflante 1 à travers la turbomachine 15. Par ailleurs, on appelle axe de révolution de la soufflante 1, l'axe X de symétrie radiale de la soufflante 1. La direction axiale correspond à la direction de l'axe X de la soufflante 1, et une direction radiale est une direction perpendiculaire à cet axe et passant par lui.

Une soufflante 1 de turbomachine 15 (par exemple une turbomachine 15 d'aéronef 100) comprend un disque 2 de soufflante 1 portant une pluralité d'aubes 3 de soufflante 1 associées à des plateformes inter-aubes. Le disque peut comprendre tout support de pales dans un rotor de type soufflante, par exemple un disque plein définissant des alvéoles ou un support d'aube y compris dans un rotor dans lequel l'aube est à calage variable en ayant le support permettant ce calage variable. Ces disques étant connus ils ne seront pas davantage décrits ici.

Chaque aube 3 comprend une structure en matériau composite 4 comportant un renfort fibreux obtenu par tissage tridimensionnel et une matrice dans laquelle est noyé le renfort fibreux.

Cette structure en matériau composite 4 comprend un pied 5, une échasse 6 et une pale 7 à profil aérodynamique. Le pied 5 est destiné à permettre la fixation de l'aube 3 au disque 2 de soufflante et s'étend à cet effet entre un fond d'une empreinte formée dans le disque 2 et la sortie 14 des portées de l'empreinte. La pale 7 à profil aérodynamique quant à elle est propre à être placée dans un flux d'air, lorsque la turbomachine 15 est en fonctionnement, afin de générer une portance. Enfin, l'échasse 6 correspond à la zone de la pale 7 qui s'étend entre le pied 5 et la pale 7, c'est-à-dire entre la sortie 14 des portées (zones de contact de l'aube avec le disque) et les plateformes inter-aubes (qui délimitent intérieurement la veine d'écoulement secondaire). L'échasse 6 n'est donc pas configurée pour s'étendre dans le flux d'air.

L'aube 3 comprend également, de manière connue en soi, un bord d'attaque, un bord de fuite, un intrados 16 et un extrados 17. Le bord d'attaque est configuré pour s'étendre en regard de l'écoulement des gaz entrant dans la turbomachine 15. Il correspond à la partie antérieure d'un profil aérodynamique qui fait face au flux d'air et qui divise l'écoulement d'air en un écoulement d'intrados et en un écoulement extrados. Le bord de fuite quant à lui correspond à la partie postérieure du profil aérodynamique, où se rejoignent les écoulements intrados et extrados.

Enfin, la structure est formée d'une pluralité de sections d'aube empilées depuis le pied 5 selon un axe d'empilement Y s'étendant radialement par rapport à l'axe de révolution X de la soufflante 1.

Dans ce qui suit, par « hauteur » on désignera une distance suivant l'axe d'empilement Y. Ainsi, le pied d'aube 5 et l'échasse 6 présente une hauteur correspondant à la distance suivant l'axe d'empilement Y entre la limite inférieure 10 du pied 5 et la limite supérieure de l'échasse 6 (à l'intersection avec la pale). On désignera par ailleurs par « épaisseur » une distance dans un plan normal à l'axe d'empilement Y et suivant un axe s'étendant entre la paroi intrados 16 et la paroi extrados 17 qui coupe l'axe d'empilement Y.

Le renfort fibreux de la structure en matériau composite 4 peut être formé à partir d'une préforme fibreuse en une seule pièce obtenue par tissage tridimensionnel ou multicouche avec épaisseur évolutive. Il comprend des torons de chaîne 9 (c'est-à-dire des torons s'étendant suivant l'axe d'empilement Y des sections d'aube 3) et de trame (c'est-à-dire des torons s'étendant suivant la corde de l'aube 3) qui peuvent notamment comprendre des fibres en carbone, en verre, en basalte, et/ou en aramide. La matrice quant à elle est typiquement une matrice polymère, par exemple époxyde, bismaléimide ou polyimide. L'aube 3 est alors formée par moulage au moyen d'un procédé d'injection sous vide de résine du type RTM (pour « Resin Transfer Moulding), ou encore VARTM (pour Vacuum Resin Transfer Molding).

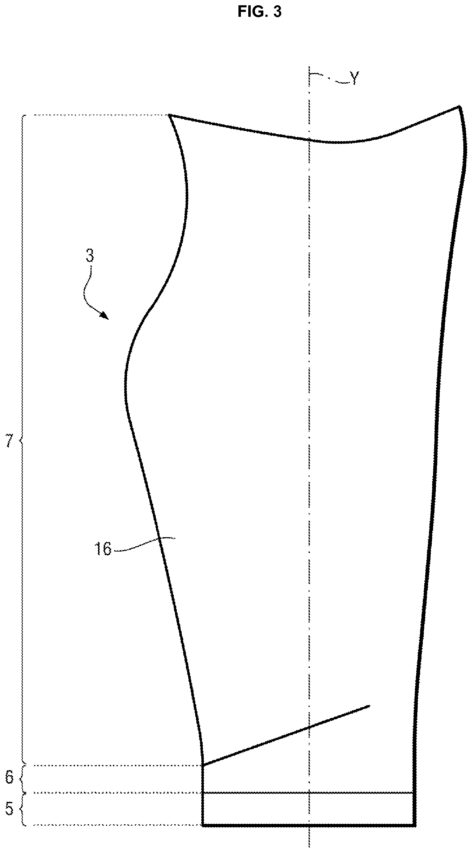

La figure 3 représente schématiquement une aube 3 dont le renfort fibreux a été mis en forme à partir d'une préforme fibreuse tissée tridimensionnelle, avant injection de résine ou densification par une matrice et usinage éventuel, afin d'obtenir une aube 3 de soufflante en matériau composite conforme à l'invention. Par tissage tridimensionnel, on comprendra que les torons de chaîne 9 suivent des trajets sinueux afin de lier entre eux des torons de trame 10 appartenant à des couches de torons de trame 10 différentes, étant noté qu'un tissage tridimensionnel, notamment à armure interlock, peut inclure des tissages 2D en surface. Différentes armures de tissage tridimensionnel peuvent être utilisées, telles que des armures interlock, multi-satin ou multi-voile, par exemple, comme décrit notamment dans le document WO 2006/136755.

Au cours du tissage, une tension est appliquée aux torons de chaîne 9 et aux torons de trame 10 afin de leur conférer une raideur différentielle et donc un embuvage respectif prédéterminés. Par embuvage d'un toron, on comprendra ici la différence entre la longueur d'un toron donné lorsqu'il est parfaitement droit et la longueur réelle (dans le renfort fibreux) de ce toron du fait de l'entrecroisement qu'il réalise afin de se lier avec les autres torons, et définissant ainsi ce que l'on appelle communément l'armure tissée du renfort fibreux. L'embuvage s'exprime généralement en pourcentages et caractérise ainsi l'ondulation du toron. De manière connue en soi, lorsqu'un toron donné est droit, sont embuvage est égal 0 % ; plus le toron est ondulé, plus son embuvage est élevé.

La structure en matériau composite 4 présente, au sein du pied 5 et/ou de l'échasse 6, une première couche 11 comprenant l'intrados 16 et présentant une première épaisseur E1 comprise entre 10 % et 25 % de l'épaisseur totale E, une deuxième couche 12 comprenant l'extrados 17 et présentant une deuxième épaisseur E2 comprise entre 10 % et 25 % de l'épaisseur totale E, et une couche centrale 13 s'étendant entre la première couche 11 et la deuxième couche 12. La première couche 11 et la deuxième couche 12 forment donc la peau de l'aube 3 tandis que la couche centrale 13 est à cœur.

Par épaisseur totale E, on comprendra ici l'épaisseur de la structure en matériau composite 4 mesurée à mi-hauteur de l'échasse 6, au niveau du bord d'attaque.

Afin d'améliorer la résistance à l'endommagement de l'aube 3 de soufflante, les torons de chaîne 9 placés en peau (c'est-à-dire dans la première et la deuxième couche 11, 12) présentent un embuvage plus important que les torons de chaîne 9 placés à cœur (c'est-à-dire dans la couche centrale 13) au sein de l'échasse 6 et/ou du pied 5. La structure en matériau composite 4 est donc plus souple en peau et plus raide à cœur, ce qui réduit les concentrations de la charge centrifuge à proximité des peaux.

De préférence, la première épaisseur E1 et la deuxième épaisseur E2 sont comprises entre 20 % et 25 %. La première épaisseur E1 et la deuxième épaisseur E2 peuvent être sensiblement égales, à 5 % près.

La différence d'embuvage des torons de chaîne 9 peut être obtenue en appliquant une tension différente aux torons de chaîne 9 et/ou aux torons de trame 10 dans le métier à tisser utilisé pour réaliser le renfort fibreux de sorte que la tension subie par les torons de chaîne 9 à cœur (dans la couche centrale 13) est supérieure à la tension subie par les torons de chaîne 9 à proximité des peaux (dans les première et deuxième couches 11, 12) et/ou la tension subie par les torons de trame 10 à cœur est inférieure à celle subie par les torons de trame 10 à proximité des peaux.

La demanderesse s'est en effet aperçue du fait que les endommagements de l'aube 3 de soufflante se situaient généralement au niveau des peaux de l'aube 3, plus précisément à proximité de la sortie 14 des portées, et que les torons de chaîne 9 dans les première et deuxième couches 11, 12 étaient plus chargés que les torons de chaîne 9 dans la couche centrale 13. L'augmentation de l'embuvage des torons de chaîne 9 dans les première et deuxième couches 11, 12 du renfort fibreux (et/ou la diminution de l'embuvage des torons de chaîne 9 dans la couche centrale 13) permet ainsi de rendre les torons de chaîne 9 en peau plus souples que les torons de chaîne 9 à cœur et de mieux répartir la charge reprise par les torons de chaîne 9 au sein de l'échasse 6 et du pied 5.

Dans une première forme de réalisation, la différence de tension subie par les torons de chaîne 9 dans la couche centrale 13 et dans les première et deuxième couches 11, 12 peut être obtenue en augmentant la tension appliquée aux torons de chaîne 9 dans la couche centrale 13 et/ou en réduisant la tension appliquée aux torons de chaîne 9 dans les première et deuxième couches 11, 12. Par exemple la tension subie par les torons de chaîne 9 de la couche centrale 13 est au moins 100 % supérieure à la tension subie par les torons de chaîne 9 dans la première et la deuxième couche 11, 12, par exemple entre 100 % et 200 % supérieure.

Dans une deuxième forme de réalisation qui peut être cumulée avec la première, la différence d'embuvage des torons de chaîne 9 dans la couche centrale 13 et dans les première et deuxième couches 11, 12 peut être obtenue en réduisant la tension appliquée aux torons de trame 10 dans la couche centrale 13 et/ou en augmentant la tension appliquée aux torons de trame 10 dans les première et deuxième couches 11, 12. La modification de la tension appliquée aux torons de trame 10 a en effet un impact direct sur la tension subie par les torons de chaîne 9 à proximité de leur interface et donc leur embuvage et leur raideur. Par exemple la tension subie par les torons de trame 10 de la couche centrale 13 est au moins 100 % inférieure à la tension subie par les torons de trame 10 dans la première et la deuxième couche 11, 12, par exemple entre 100 % et 200 % supérieure. On notera toutefois que les torons de trame 10 subissent moins de frottement car elles sont directement en contact avec les torons de chaîne 9 au niveau bas du métier à tisser. La tension à appliquer aux torons de trame 10 peut donc être plus faible que sur les torons de chaîne 9 pour un effet équivalent sur l'embuvage des torons de chaîne 9.

On notera que le niveau de tension appliqué à un toron 9, 10 lors du procédé de tissage a un effet direct sur son embuvage, et donc sur la propriété mécanique dans la direction du toron. Ainsi, la diminution de l'embuvage des torons de chaîne 9 (et donc l'augmentation de leur raideur et de leur résistance à la rupture) peut se faire en diminuant la tension dans les torons de trame 10 ou en augmentant la tension dans les torons de chaîne 9. Comme indiqué ci-avant, la diminution de la tension des torons de trame 10 et l'augmentation de la tension des torons de chaîne 9 peut se faire de manière couplée ou dissociée afin d'obtenir une diminution de l'embuvage recherchée. Le raisonnement pour la diminution de l'embuvage pour une direction (par exemple dans les torons de chaîne) a l'effet inverse pour l'embuvage de la direction orthogonale (les torons de trame 10).

La variation de tension appliquée par le métier à tisser sur les torons de chaîne 9 et/ou de trame 10 peut être obtenue par tout moyen adapté, le principe étant d'exercer une tension d'appel directement à la sortie de la bobine sur laquelle est enroulée le toron. De manière connue en soi, cette tension peut être appliquée par un système de ressort venant tirer chaque toron de chaîne 9, ou à l'aide de poids positionnés entre la sortie du toron de chaîne 9 de la bobine et des œillets des lisses du métier à tisser. Par ailleurs, il existe dans le commerce des bobines permettant de maîtriser la tension appliquée. Enfin, la tension appliquée aux torons de trame 10 peut être gérée de manière similaire que pour les torons de chaîne 9, et/ou en utilisant une pince qui vient attraper l'extrémité du toron de trame 10 et le tire à travers la foule (entrelacement des chaînes), puis relâche le toron de trame 10 une fois que le battement du métier à tisser est passé à la séquence suivante. Ces moyens d'application d'une tension à un toron (de chaîne 9 ou de trame 10) étant connus en soi, ils ne seront pas davantage détaillés ici.

De préférence, la première couche 11, la deuxième couche 12 et la couche centrale 13 s'étendent dans le pied 5 et l'échasse 6 de la structure en matériau composite 4. Il s'agit en effet des parties de l'aube 3 qui sont susceptibles d'être endommagées en fonctionnement par le chargement centrifuge.

Lorsque la différence de tension est obtenue par application d'une tension différente sur les torons de trame 10 de la couche centrale 13 et sur les torons de trame 10 des première et deuxième couches 11, 12, la première couche 11, la deuxième couche 12 et la couche centrale 13 peuvent s'étendre sur une partie seulement la hauteur de l'aube 3. Dans ce cas, les trois couches 11, 12, 13 s'étendent à proximité de la sortie 14 des portées, dans l'échasse 6 et le cas échéant dans le pied 5. Dans une forme de réalisation, les trois couches 11, 12, 13 s'étendent de part et d'autre de la sortie 14 des portées, par exemple sur une hauteur h1 le long du pied 5 et une hauteur h2 le long de l'échasse 6 comprises entre 15 % et 25 % de l'épaisseur totale E, de préférence entre 20 % et 25 % de l'épaisseur totale E (soit une hauteur totale h1 + h2 comprise entre 30 % et 50 % de l'épaisseur totale E).

Lorsque la différence de tension est obtenue par application d'une tension différente sur les torons de chaîne 9 de la couche centrale 13 et sur les torons de chaîne 9 des première et deuxième couches 11, 12, la première couche 11, la deuxième couche 12 et la couche centrale 13 peuvent s'étendre sur toute la hauteur de l'aube 3. En variante, les torons de chaîne 9 dans la première et deuxième couche 11, 12 peuvent le cas échéant être sortis progressivement du renfort fibreux au niveau de la limite supérieure des première et deuxième couches 11, 12 (à une distance comprise entre 15 % et 25 % de l'épaisseur totale E, de préférence entre 20 % et 25 % de l'épaisseur totale E, de la sortie 14 des portées) et remplacés par autant de torons de chaîne 9 subissant une tension équivalente à celle des torons de chaîne 9 dans la couche centrale 13, afin de limiter les gradients de changement de propriété dans la structure en matériau composite (raideur et résistance à la rupture) qui seraient susceptibles de fragiliser l'aube 3.

On notera que la transition dans l'épaisseur entre la première couche 11 (la deuxième couche 12, respectivement) et la couche centrale 13 peut être progressive, c'est-à-dire que la tension appliquée aux torons de chaîne 9 et/ou la densité de torons de chaîne 9 subissant une tension plus importante augmente progressivement de la première couche 11 (respectivement, de la deuxième couche 12) vers la couche centrale 13. Cette transition des propriétés des torons de chaîne 9 de la première couche 11 (la deuxième couche 12, respectivement) vers la couche centrale 13 peut par exemple être réalisée sur une épaisseur comprise entre 2% et 8 % de l'épaisseur totale E.

Afin d'améliorer encore la souplesse de la structure en matériau composite 4 à proximité des peaux, les torons de trame 10 et/ou de chaîne 9 dans la première couche 11 et la deuxième couche 12 peuvent être réalisés dans un matériau présentant un module d'élasticité inférieur à celui des torons de trame 10 et/ou de chaîne dans la couche centrale 13. Par exemple, les torons 9 et/ou 10 dans la première et la deuxième couche 11, 12 peuvent présenter un module d'élasticité compris entre 150 GPa et 190 GPa et peuvent comprendre des fibres de verre ou de basalte. Les torons 9 et/ou 10 dans la couche centrale 13 peuvent présenter un module d'élasticité compris entre 240 GPa et 350 GPa, de préférence supérieur ou égal à 250 GPa, et peuvent comprendre des fibres de carbone. De la sorte, les torons 9, 10 à cœur assurent une raideur suffisante de l'aube 3 permettant de respecter les critères de conception et de garantir son statut fréquentiel, tandis que les torons 9, 10 en peau limitent l'initiation et la propagation d'endommagements de l'aube 3.

De manière générale, les configurations décrites sont valables pour des turbomachines 15 dont la soufflante 1 peut avoir un diamètre extérieur de l'ordre de 1,8 mètre à 3 mètres. Le nombre d'aubes 3 de la soufflante 1 peut être égal par à 16 ou 18. Quel que soit le diamètre de la soufflante 1, le nombre d'aubes 3 de soufflante sera réduit autant que possible.

## Revendications

1. Aube de soufflante (3) d'une turbomachine (15) comprenant une structure en matériau composite (4) comprenant un pied (5) configuré pour être inséré dans une empreinte d'un disque de soufflante, une pale (7) propre à s'étendre dans un flux d'air et une échasse (6) s'étendant entre le pied (5) et la pale (7) ;
dans laquelle la structure en matériau composite (4) présente un intrados (16), un extrados (17) et une épaisseur totale (E) au niveau de l'échasse (6), l'épaisseur totale (E) étant mesurée entre l'intrados (16) et l'extrados (17) dans la partie d'échasse (6) dans un plan normal à un axe d'empilement (Y) de l'aube ;
dans laquelle la structure en matériau composite (4) est obtenue par tissage tridimensionnel de torons de trame (10) et de torons de chaine (9) ;
l'aube de soufflante (3) étant **caractérisée en ce que** la structure en matériau composite (4) présente, au sein du pied (5) et/ou de l'échasse (6), une première couche (11) comprenant l'intrados (16) et présentant une première épaisseur (E1) comprise entre 10 % et 25 % de l'épaisseur totale (E), une deuxième couche (12) comprenant l'extrados (17) et présentant une deuxième épaisseur (E2) comprise entre 10 % et 25 % de l'épaisseur totale (E), et une couche centrale (13) s'étendant entre la première couche (11) et la deuxième couche (12), et **en ce qu'**un embuvage des torons de chaîne (9) dans les première et deuxième couches (11, 12) est supérieur à un embuvage des torons de chaîne (9) dans la couche centrale (13).

2. Aube de soufflante selon la revendication 1, dans laquelle les torons de chaîne (9) au sein de la structure en matériau composite (4) sont contraints avec une tension prédéterminée, la tension subie par les torons de chaîne (9) de la couche centrale (13) étant supérieure à la tension subie par les torons de chaîne (9) dans les première et deuxième couches (11, 12).

3. Aube de soufflante (3) selon l'une des revendications 1 et 2, dans laquelle les torons de trame (10) au sein de la structure en matériau composite (4) sont contraints avec une tension prédéterminée, la tension subie par les torons de trame (10) de la couche centrale (13) étant inférieure à la tension subie par les torons de trame (10) dans la première et la deuxième couche (12) au sein du pied (5) et/ou de l'échasse (6).

4. Aube de soufflante (3) selon l'une des revendications 2 ou 3, dans laquelle la tension subie par les torons de chaîne (9) de la couche centrale (13) est au moins 100 % supérieure à la tension subie par les torons de chaîne (9) dans la première et la deuxième couche (12), par exemple entre 100 % et 200 %, et/ou la tension subie par les torons de trame (10) de la couche centrale (13) est au moins 100 % inférieure à la tension subie par les torons de trame (10) dans la première et la deuxième couche (12), par exemple entre 100 % et 200 %.

5. Aube de soufflante (3) selon l'une des revendications 1 à 4, dans laquelle la première couche (11), la deuxième couche (12) et la couche centrale (13) s'étendent au sein de l'échasse (6) et du pied (5).

6. Aube de soufflante (3) selon la revendication 5, dans laquelle la première couche (11), la deuxième couche (12) et la couche centrale (13) s'étendent au sein de l'échasse (6) sur une distance (D) au moins égale à 15 % de l'épaisseur totale (E), de préférence est au moins égale à 20 % de l'épaisseur totale (E).

7. Aube de soufflante (3) selon l'une des revendications 1 à 6, dans laquelle la première épaisseur (E1) et la deuxième épaisseur (E2) sont sensiblement égales.

8. Aube de soufflante (3) selon l'une des revendications 1 à 7, dans laquelle la première épaisseur (E1) et la deuxième épaisseur (E2) sont comprises entre 20 % et 25 % de l'épaisseur totale (E).

9. Aube de soufflante (3) selon l'une des revendications 1 à 8, dans laquelle les torons de trame (10) et/ou de chaîne (9) dans la première couche (11) et dans la deuxième couche (12) présentent un module d'élasticité compris entre 150 GPa et 190 GPa et peuvent comprendre des fibres de verre ou de basalte, et les torons de trame (10) et/ou de chaîne dans la couche centrale (13) présentent un module d'élasticité compris entre 240 GPa et 350 GPa, de préférence supérieur ou égal à 250 GPa, et peuvent comprendre des fibres de carbone.

10. Soufflante (1) comprenant une pluralité d'aubes de soufflante (3) selon l'une des revendications 1 à 9.

11. Turbomachine (15) comprenant une soufflante (1) selon la revendication 10.

12. Aéronef comprenant au moins une turbomachine selon la revendication 11.

## Patentansprüche

1. Gebläseschaufel (3) einer Turbomaschine (15), umfassend die eine Struktur aus Verbundmaterial (4) umfasst, umfassend einen Fuß (5), der ausgelegt ist, um in eine Vertiefung einer Gebläsescheibe eingesetzt zu sei, eine Schaufel (7), die imstande ist, sich in einen Luftstrom zu erstrecken, und eine Stelze (6), die sich zwischen dem Fuß (5) und der Schaufel (7) erstreckt;
wobei die Struktur aus Verbundmaterial (4) ein Intrados (16), ein Extrados (17) und eine Gesamtdicke (E) im Bereich der Stelze (6) aufweist, wobei die Gesamtdicke (E) zwischen des Intrados (16) und des Intrados (17) im Bereich der Stelze (6) in einer Ebene senkrecht zu einer Stapelachse (Y) der Schaufel gemessen wird;
wobei die Struktur aus Verbundmaterial (4) durch dreidimensionales Weben von Schusssträngen (10) und von Kettsträngen (9) erhalten wird;
wobei die Gebläseschaufel (3) **dadurch gekennzeichnet ist, dass** die Struktur aus Verbundmaterial (4) innerhalb des Fußes (5) und/oder der Stelze (6) eine erste Schicht (11) aufweist, die den Intrados (16) umfasst und eine erste Dicke (E1) aufweist, die zwischen 10% und 25% der Gesamtdicke (E) liegt, eine zweite Schicht (12), die den Intrados (17) umfasst und eine zweite Dicke (E2) zwischen 10% und 25% der Gesamtdicke (E) aufweist, und eine Kernschicht (13), die sich zwischen der ersten Schicht (11) und der zweiten Schicht (12) erstreckt, und dass ein Einsprung der Kettstränge (9) in der ersten und zweiten Schicht (11, 12) größer ist als ein Einsprung der Kettstränge (9) in der Kernschicht (13).

2. Gebläseschaufel nach Anspruch 1, wobei die Kettsträngen (9) innerhalb der Struktur aus Verbundmaterial (4) mit einer vorbestimmten Spannung belastet werden, wobei die Spannung, der die Kettstränge (9) in der Kernschicht (13) ausgesetzt sind, größer ist als die Spannung, der die Kettstränge (9) in der ersten und zweiten Schicht (11, 12) ausgesetzt sind.

3. Gebläseschaufel (3) nach einem der Ansprüche 1 und 2, wobei die Schussstränge (10) innerhalb der Struktur aus Verbundmaterial (4) mit einer vorbestimmten Spannung belastet werden, wobei die Spannung, der die Schussstränge (10) in der Kernschicht (13) ausgesetzt sind, kleiner ist als die Spannung, der die Schussstränge (10) in der ersten und zweiten Schicht (12) innerhalb des Fußes (5) und/oder der Stelze (6) ausgesetzt sind.

4. Gebläseschaufel (3) nach einem der Ansprüche 2 oder 3, wobei die Spannung, der die Kettstränge (9) in der Kernschicht (13) ausgesetzt sind, mindestens 100% größer ist als die Spannung, der die Kettstränge (9) in der ersten und zweiten Schicht (12) ausgesetzt sind, beispielsweise zwischen 100% und 200%, und/oder die Spannung, der die Schussstränge (10) der Kernschicht (13) ausgesetzt sind, mindestens 100% kleiner ist als die Spannung, der die Schussstränge (10) in der ersten und zweiten Schicht (12) ausgesetzt sind, beispielsweise zwischen 100% und 200%.

5. Gebläseschaufel (3) nach einem der Ansprüche 1 bis 4, wobei sich die erste Schicht (11), die zweite Schicht (12) und die Kernschicht (13) innerhalb der Stelze (6) und des Fußes (5) erstrecken.

6. Gebläseschaufel (3) nach Anspruch 5, wobei sich die erste Schicht (11), die zweite Schicht (12) und die Kernschicht (13) innerhalb der Stelze (6) über eine Strecke (D) erstrecken, die mindestens gleich 15% der Gesamtdicke (E) ist, vorzugsweise mindestens gleich 20% der Gesamtdicke (E) beträgt.

7. Gebläseschaufel (3) nach einem der Ansprüche 1 bis 6, wobei die erste Dicke (E1) und die zweite Dicke (E2) etwa gleich sind.

8. Gebläseschaufel (3) nach einem der Ansprüche 1 bis 7, wobei die erste Dicke (E1) und die zweite Dicke (E2) zwischen 20% und 25% der Gesamtdicke (E) liegen.

9. Gebläseschaufel (3) nach einem der Ansprüche 1 bis 8, wobei die Schuss- (10) und/oder Kettstränge (9) in der ersten Schicht (11) und in der zweiten Schicht (12) einen Elastizitätsmodul aufweisen, das zwischen 150 GPa und 190 GPa liegt und Glas- oder Basaltfasern umfassen können, und die Schuss- (10) und/oder Kettstränge in der Kernschicht (13) ein Elastizitätsmodul aufweisen, das zwischen 240 GPa und 350 GPa liegt, vorzugsweise über oder gleich 250 GPa beträgt und Kohlenstofffasern umfassen können.

10. Gebläse (1), das eine Vielzahl von Gebläseschaufeln (3) nach einem der Ansprüche 1 bis 9 umfasst.

11. Turbomaschine (15), das ein Gebläse (1) nach Anspruch 10 umfasst.

12. Luftfahrzeug, das mindestens eine Turbomaschine nach Anspruch 11 umfasst.

## Claims

1. A fan blade (3) of a turbomachine (15) comprising a composite material structure (4) comprising a foot (5) configured to be inserted in a cavity of a fan disc, a vane (7) adapted to extend in an air flow and a stilt (6) extending between the foot (5) and the vane (7);
wherein the composite material structure (4) has a pressure face (16), a suction face (17) and a total thickness (E) at the stilt (6), the total thickness (E) being measured between the pressure face (16) and the suction face (17) in the stilt portion (6) in a plane normal to a stacking axis (Y) of the blade;
wherein the composite material structure (4) is obtained by three-dimensional weaving of weft strands (10) and warp strands (9)
the fan blade (3) being **characterised in that** the composite material structure (4) has, within the root (5) and/or the stilt (6), a first layer (11) comprising the pressure face (16) and having a first thickness (E1) of between 10% and 25% of the total thickness (E), a second layer (12) comprising the suction face (17) and having a second thickness (E2) of between 10% and 25% of the total thickness (E), and a central layer (13) extending between the first layer (11) and the second layer (12), and **in that** an entanglement of the warp strands (9) in the first and second layers (11, 12) is greater than an entanglement of the warp strands (9) in the central layer (13).

2. A fan blade according to claim 1, wherein the warp strands (9) within the composite material structure (4) are stressed with a predetermined tension, the tension experienced by the warp strands (9) in the central layer (13) being greater than the tension experienced by the warp strands (9) in the first and second layers (11, 12).

3. A fan blade (3) according to any of claims 1 and 2, wherein the weft strands (10) within the composite material structure (4) are stressed with a predetermined tension, the tension experienced by the weft strands (10) in the central layer (13) being less than the tension experienced by the weft strands (10) in the first and second layers (12) within the foot (5) and/or stilt (6).

4. A fan blade (3) according to one of claims 2 or 3, wherein the tension experienced by the warp strands (9) in the central layer (13) is at least 100% greater than the tension experienced by the warp strands (9) in the first and second layers (12), for example between 100% and 200%, and/or the tension experienced by the weft strands (10) in the central layer (13) is at least 100% less than the tension experienced by the weft strands (10) in the first and second layers (12), for example between 100% and 200%.

5. A fan blade (3) according to one of claims 1 to 4, wherein the first layer (11), the second layer (12) and the central layer (13) extend within the stilt (6) and the foot (5).

6. A fan blade (3) according to claim 5, wherein the first layer (11), the second layer (12) and the central layer (13) extend within the stilt (6) over a distance (D) at least equal to 15% of the total thickness (E), preferably at least equal to 20% of the total thickness (E).

7. A fan blade (3) according to one of claims 1 to 6, wherein the first thickness (E1) and the second thickness (E2) are substantially equal.

8. A fan blade (3) according to one of claims 1 to 7, wherein the first thickness (E1) and the second thickness (E2) are between 20% and 25% of the total thickness (E).

9. A fan blade (3) according to one of claims 1 to 8, wherein the weft (10) and/or warp (9) strands in the first layer (11) and in the second layer (12) have a modulus of elasticity of between 150 GPa and 190 GPa and may comprise glass or basalt fibres, and the weft (10) and/or warp strands in the central layer (13) have a modulus of elasticity of between 240 GPa and 350 GPa, preferably greater than or equal to 250 GPa, and may comprise carbon fibres.

10. A fan (1) comprising a plurality of fan blades (3) according to one of claims 1 to 9.

11. Turbomachine (15) comprising a fan (1) according to claim 10.

12. Aircraft comprising at least one turbomachine according to claim 11.
